# EUROPÄISCHE PATENTSCHRIFT

(11) **EP 0 649 019 B1**
(45) Veröffentlichungstag und Bekanntmachung des Hinweises auf die Patenterteilung: **05.07.2000**
(21) Anmeldenummer: 93810734.9
(22) Anmeldetag: 19.10.1993
(51) Int. Cl.: G01N 30/56

(54) **Axial komprimierbare Einrichtung für die Chromatographie**
Axially compressible device for chromatography
Dispositif axialement compressible pour la chromatographie

(43) Veröffentlichungstag der Anmeldung: 19.04.1995
(73) Patentinhaber: LABOMATIC INSTRUMENTS AG, CH-4123 Allschwil (CH)
(72) Erfinder: Baur, Charles, CH-2026 Sanges - St. Aubin (CH); Marchand, Claude, CH-4434 Hölstein (CH)
(74) Vertreter: Heubeck, Bernhard

(56) Entgegenhaltungen:
- EP-A- 0 040 663
- EP-A- 0 041 608
- EP-A- 0 049 850
- EP-A- 0 460 409
- US-A- 4 597 866
- PATENT ABSTRACTS OF JAPAN vol. 10, no. 154 (P-463)(2210) 4. Juni 1986 & JP-A-61 007 466 (SHOWA DENKO) 14. Januar 1986

## Beschreibung

Die Erfindung betrifft eine Vorrichtung zum axialen Komprimieren einer Säule für die Chromatographie gemäss dem Oberbegriff des Anspruches 1 sowie eine Einrichtung für die Chromatographie mit einer derartigen Vorrichtung.

Aus der EP-A-0 040 663 ist eine Säule für die Chromatographie bekannt, die ein Rohr mit einem Gewindeabschnitt am Umfang, einen Abschlusskörper, einen Nachfederungsmechanismus, der ein Druckstück sowie eine Tellerfeder enthält und eine Überwurfmutter aufweist. Der Nachfederungsmechanismus ist innerhalb des Rohres angeordnet. Das Druckstück liegt auf dem Abschlusskörper und die Tellerfeder ist zwischen dem Druckstück und der Überwurfmutter angeordnet. Bei dieser Säule wird der Druck über die Tellerfeder auf die Füllung aufgebracht.

Diese Säule hat die Nachteile, dass der Druck über die Tellerfedern auf die Füllung aufgebracht wird, so dass beim Zusammenbau der Säule die Verdichtung der Füllung mittels der Tellerfeder erfolgt, so dass öfter nachgestellt werden muss oder dass die Füllung vor dem Zusammenbau der Säule verdichtet werden muss.

Aus der EP-A-0 041 608 ist eine Trennsäule für die Flüssigkeitschromatographie bekannt, die einen unter Federwirkung stehenden Kolben, um die Füllung unter Druck zu setzen, eine Gewindespindel aufweist, um den Kolben gegen den Druck der Feder von der Säule abzuheben und eine flexible Membrane, um die Säule abzudichten.

Diese Säule hat die Nachteile, dass die Komprimierung der Füllung durch die Verformbarkeit der Membrane begrenzt ist, so dass die Füllung vor dem Zusammenbau der Säule verdichtet werden muss.

Der Erfindung liegt die Aufgabe zugrunde eine Vorrichtung zum axialen Komprimieren einer Säule für die Chromatographie zu schaffen, welche die genannten Nachteile nicht aufweist.

Diese Aufgabe wird erfindungsgemäss mit den kennzeichnenden Merkmalen des Anspruches 1 gelöst.

Der mit der Erfindung erreichbare Vorteil ist darin zu sehen, dass vorhandene Säulen auf einfache Art mit der Vorrichtung umrüstbar sind.

Eine Einrichtung für die Chromatographie ist erfindungsgemäss durch die Merkmale des Anspruches 8 gekennzeichnet.

Bei dieser Einrichtung erweist sich als vorteilhaft, dass zum Füllen der Säule nach dem Zurückziehen des ersten Abschlusskörpers lediglich die Vorrichtung abgenommen werden muss, dass nach dem Füllen der Säule die Füllung mittels der Vorrichtung verdichtet (gepresst) wird und dass zum Austreiben der verbrauchten Füllung aus der Säule der zweite Abschlusskörper entfernt und anschliessend die Füllung durch die Vorrichtung ausgestossen wird.

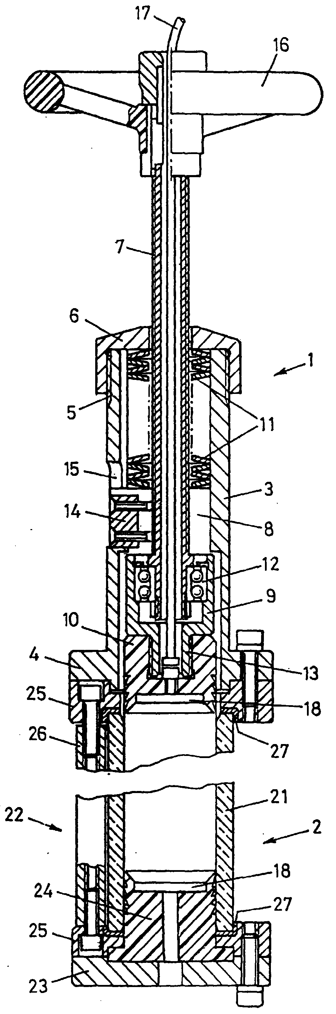

Im folgenden wird die Erfindung anhand der beiliegenden Zeichnung erläutert, die einen Schnitt durch eine Ausführungsform einer erfindungsgemässen Einrichtung für die Chromatographie mit einer Ausführungsform einer erfindungsgemässen Vorrichtung zum axialen Komprimieren der Säule zeigt.

Wie die Figur zeigt, besteht die Einrichtung im wesentlichen aus einer Vorrichtung 1 zum axialen Komprimieren einer Säule für die Chromatographie und einer derartigen Säule 2.

Die Vorrichtung 1 enthält ein zylinderförmiges Gehäuse 3, das an einem Ende einen Flansch 4 und am anderen Ende ein Aussengewinde 5 aufweist und einen Deckel 6 mit einem Durchgangsloch, der das Gehäuse 3 einseitig abschliesst. Die Vorrichtung enthält ferner ein Schraubengetriebe mit einer Gewindespindel 7, die den Deckel durchdringt und einem Organ 8, das auf die Gewindespindel aufgeschraubt ist und an seinem Umfang an der Innenseite des Gehäuses anliegt, einen Stempel 9, der an einem Ende der Gewindespindel 7 drehbar montiert ist, einen Abschlusskörper 10, der mit dem Stempel 9 verbunden ist und einen aus Tellerfedern 11 bestehenden Kraftspeicher.

Der Stempel 9 ist mittels eines Wälzlagers 12 an der Gewindespindel 7 gelagert und hat einen Gewindeansatz 13, auf welchen der Abschlusskörper 10 aufgeschraubt ist. Das Organ 8 ist verdrehfest im Gehäuse 3 angeordnet. Hierzu ist ein Teil 14 vorgesehen, der einerseits mit dem Organ 8 verbunden und andererseits in einem Schlitz 15 geführt ist, der in der Gehäusewandung ausgebildet ist. Dieser Teil bildet ein Anzeigemittel für die Druckbeaufschlagung der Füllung in der Säule. Der Kraftspeicher 11 ist zwischen dem Organ 8 und dem Deckel 6 des Gehäuses angeordnet.

Die Gewindespindel 7 ist eine Hohlspindel und am anderen Ende mit einem Handrad 16 versehen. In diesem Zusammenhang wird darauf hingewiesen, dass zum Antreiben der Gewindespindel 7 eine pneumatische, hydraulische oder elektrische Einrichtung verwendet werden kann. Mit einer derartigen Antriebseinrichtung und einer mit dem Anzeigeteil 14 in Wirkverbindung stehenden Abtasteinrichtung (nicht dargestellt) kann erfindungsgemäss eine Druckeinstellung über eine nicht dargestellte Steuereinrichtung erfolgen. Je nach Anforderung kann in der Steuereinrichtung ein Druckregelkreis vorgesehen werden. Durch die Gewindespindel 7 ist eine Zuleitung 17 zum Abschlusskörper 10 geführt, die in eine Filtereinheit 18 mündet. In diesem Zusammenhang wird darauf hingewiesen, dass die gleiche Filtereinheit 18 im Abschlusskörper 24 angeordnet ist.

Die Säule 2 enthält ein Rohr 21 aus Glas und eine Halteeinrichtung 22 für das Rohr, wodurch eine Baueinheit gebildet wird. Ferner enthält die Säule einem Abschlusskörper 24, der das Rohr an einem Ende abschliesst und einen Abschlussflansch 23, der den Abschlusskörper an dem Rohr hält. Die Halteeinrichtung enthält zwei Flansche 25 und drei Zugstangen 26. Die Flansche liegen jeweils an einer Stirnseite des Rohres 21 an und werden mittels der Zugstangen am Rohr gehalten. Zwischen dem Rohr und den Flanschen ist jeweils ein Ring 27 aus Kunststoff angeordnet, um das Rohr vor Beschädigung durch die Flansche aus Stahl zu schützen.

Die Figur zeigt die Einrichtung im drucklosen Zustand, in dem die Vorrichtung 1 von der Säule 2 getrennt werden kann, wobei der Abschlusskörper 10 mit der Vorrichtung abgenommen wird. Durch diese erfindungsgemässe Zuordnung des Abschlusskörpers 10 zur Vorrichtung ergibt sich der Vorteil, dass die Füllung auf einfache Weise in die Säule eingebracht werden kann.

Wie der Figur zu entnehmen ist, wird nach dem Einbringen der Füllung die Vorrichtung 1 auf der Säule 2 montiert und damit die Säule 2 abgeschlossen. Durch Drehen der Gewindespindel 7 wird der Abschlusskörper 10 gegen die Füllung verschoben. Eine Drehung des Abschlusskörpers wird durch den drehbeweglich auf der Gewindespindel 7 angeordneten Stempel 9 verhindert. Um dies sicherzustellen, kann eine Drehsicherung vorgesehen werden. Liegt der Abschlusskörper auf der Füllung auf, so wird die Füllung mit Druck beaufschlagt und gepresst. Je nach dem Grad der Kompaktheit der Füllung in der Säule wird durch die Drehung der Gewindespindel 7 das Organ 8 gegen den Kraftspeicher 11 verschoben und die Tellerfedern zusammengedrückt, bis der Anzeigeteil 14 am Ende des Schlitzes 15 anliegt. In dieser Stellung ist die Füllung mit dem maximalen Druck beaufschlagt, der mittels des Kraftspeichers 11 aufrechterhalten wird. Da die Füllung unter dem Einfluss des durch den Kraftspeicher ausgeübten Druckes komprimiert wird, dehnt sich der Kraftspeicher 11 aus. Der Wert der Druckabnahme wird durch den sich in Richtung der Säule verlagernden Anzeigeteil 14 angezeigt. Erreicht die Druckabnahme einen bestimmten Wert, so kann durch Drehen der Gewindespindel 7 der Druck auf die Füllung in der Säule wieder erhöht werden.

Nachzutragen ist noch, dass der erste und zweite Abschlusskörper 10, 24 erfindungsgemäss selbstdichtend sind. Bei der beschriebenen Ausführungsform sind der erste und zweite Abschlusskörper mittels Lippendichtungen gegen das Rohr 21 abgedichtet.

Anstelle der Tellerfedern 11 können erfindungsgemäss federnde Organe z.B. aus Gummi, Druckfedern oder dgl. verwendet werden.

## Patentansprüche

1. Vorrichtung zum axialen Komprimieren einer Säule für die Chromatographie, mit einen Kraftspeicher (11), wobei die Säule mit einer Füllung versehbar ist und an den Enden mittels eines ersten und zweiten Abschlusskörper abschliessbar ist gekennzeichnet durch ein zylinderförmiges Gehäuse (3) und einen Deckel (6) mit einem Durchgangsloch, der das Gehäuse (3) einseitig abschliesst, durch eine Gewindespindel (7), die den Deckel (6) durchdringt und mit dem ersten Abschlusskörper (10) in Wirkverbindung ist, um den ersten Abschlusskörper in der Säule zu verschieben und die Füllung mit Druck zu beaufschlagen, durch eine Mutter (8) und durch einen Teil (14), der einerseits mit der Mutter (8) verbunden ist und andererseits in einem Schlitz (15) geführt ist, derart, dass die Mutter (8) verdrehfest auf der Gewindespindel (7) angeordnet ist, wobei der Kraftspeicher (11) zwischen der Mutter (8) und dem Deckel (6) des Gehäuses (3) angeordnet ist und die Gewindespindel (7) teilweise umschliesst, wobei die Mutter durch Drehen der Gewindespindel (7) gegen den Kraftspeicher (11) verschoben wird, um den auf die Füllung aufgebrachten Druck auf den Kraftspeicher (11) zu übertragen und wobei der Kraftspeicher dazu bestimmt ist, diesen Druck aufrecht zu erhalten.

2. Vorrichtung nach Anspruch 1, dadurch gekennzeichnet, dass der Kraftspeicher (11) aus Tellerfedern besteht.

3. Vorrichtung nach Anspruch 1, dadurch gekennzeichnet, dass die Gewindespindel (7) mit dem ersten Abschlusskörper (10) verbunden ist.

4. Vorrichtung nach Anspruch 1, gekennzeichnet durch eine Antriebseinrichtung (16), die mit der Gewindespindel (7) verbunden ist.

5. Vorrichtung nach Anspruch 1, dadurch gekennzeichnet dass eine erste Filtereinheit (18) im ersten Abschlusskörper (10) angeordnet ist und dass die Filtereinheit ein Sinterkörper ist.

6. Vorrichtung nach Anspruch 5, dadurch gekennzeichnet, dass die Filtereinheit (18) mindestens zwei Organe umfasst, die aus einem Material bestehen ausgewählt aus der Gruppe Glas, Keramik, Metall oder Kunststoff.

7. Vorrichtung nach Anspruch 1, dadurch gekennzeichnet, dass die Gewindespindel (7) eine Hohlspindel ist und dass eine Zuleitung (17) vorgesehen ist, die durch die Hohlspindel geführt ist und in die Filtereinheit des ersten Abschlusskörpers (10) mündet.

8. Einrichtung für die Chromatographie, mit einer Säule (2) und einer Vorrichtung nach einem der Ansprüche 2 bis 7, dadurch gekennzeichnet, dass die Säule (2) ein Rohr (21), eine Halteeinrichtung (22) mit zwei Flanschen (25), die an den Stirnseiten des Rohres anliegen, drei Zugstangen (26), welche die Flansche an dem Rohr halten, einen zweiten Abschlusskörper (24) und einen Abschlussflansch (23) enthält und als Baueinheit ausgebildet ist und dass die Vorrichtung (1) an der Halteeinrichtung (22) montiert ist, wobei die Säule (2) einerseits durch die Vorrichtung und andererseits durch den zweiten Abschlusskörper (24) abgeschlossen ist.

9. Einrichtung nach Anspruch 8, dadurch gekennzeichnet, dass das Rohr (21) aus einem Material besteht ausgewählt aus der Gruppe Glas, Keramik, Metall oder Kunststoff.

10. Einrichtung nach Anspruch 9, dadurch gekennzeichnet, dass eine zweite Filtereinheit (18) im zweiten Abschlusskörper (10) angeordnet ist und dass die Filtereinheit ein Sinterkörper ist.

11. Einrichtung nach Anspruch 9, dadurch gekennzeichnet, dass die zweite Filtereinheit (18) mindestens zwei Organe umfasst, die aus einem Material bestehen ausgewählt aus der Gruppe Glas, Keramik, Metall oder Kunststoff.

12. Verfahren zum Betrieb der Einrichtung nach einem der Ansprüche 8 bis 11, dadurch gekennzeichnet, dass die Säule mit einer Füllung versehen wird, dass die Vorrichtung auf die Säule montiert wird und dass mittels der Vorrichtung die Füllung vorerst gepresst (verdichtet) und anschliessend mit dem maximalen Druck beaufschlagt wird.

## Claims

1. Apparatus for the axial compression of a column for chromatography, comprising an energy accumulator (11), wherein the column is provided with a filling and can be closed off at the ends by means of a first closure body and a second closure body, characterised by a cylindrical housing (3) and a cover (6) with a through-aperture which closes the housing (3) at one end, by a threaded spindle (7) which passes through the cover (6) and is in operative connection with the first closure body (10) in order to displace the first closure body in the column and to apply pressure to the filling, by a nut (8) and by a part (14) which is connected, on the one hand, to the nut (8) and, on the other hand, is guided in a slot (15) such that the nut (8) is rotationally fixedly arranged on the threaded spindle (7), with the energy accumulator (11) being disposed between the nut (8) and the cover (6) of the housing (3) and partly surrounding the threaded spindle (7), with the nut being displaced by rotation of the threaded spindle (7) against the energy accumulator (11) in order to transfer the pressure applied to the filling to the energy accumulator (11), and with the energy accumulator being further intended to maintain this pressure.

2. Apparatus in accordance with claim 1, characterized in that the energy accumulator (11) consists of plate springs.

3. Apparatus in accordance with claim 1, characterized in that the threaded spindle (7) is connected to the first closure body (10).

4. Apparatus in accordance with claim 1, characterized by a drive device (16) which is connected to the threaded spindle (7).

5. Apparatus in accordance with claim 1, characterized in that a first filter unit (18) is arranged in the first closure body (10) and in that the filter unit is a sintered body.

6. Apparatus in accordance with claim 5, characterized in that the filter unit (18) comprises at least two members which consist of a material selected from the group glass, ceramic, metal or plastic.

7. Apparatus in accordance with claim 1, characterized in that the threaded spindle (7) is a hollow spindle, and in that a feed line (17) is provided which is led through the hollow spindle and opens into the filter unit of the first closure body (10).

8. Apparatus for chromatography comprising a column (2) and an apparatus in accordance with one of the claims 2 to 7, characterized in that the column (2) contains a tube (21), a holding means (22) with two flanges (25) which contact the ends of the tube, three tie-bars (26) which hold the flanges on the tube, a second closure body (24) and a closure flange (23) and is formed as a module, and in that the apparatus (1) is installed on the holding means (22), with the column (2) being closed off, on the one hand, by the apparatus and, on the other hand, by the second closure body (24).

9. Apparatus in accordance with claim 8, characterized in that the tube (21) consists of a material selected from the group glass, ceramic, metal or plastic.

10. Apparatus in accordance with claim 9, characterized in that a second filter unit (18) is arranged in the second closure body (10) and in that the filter unit is a sintered body.

11. Apparatus in accordance with claim 9, characterized in that the second filter unit (18) comprises at least two members which consist of a material selected from the group glass) ceramic, metal or plastic.

12. Method for the operation of the apparatus in accordance with one of the claims 8 to 11, characterized in that the column is provided with a filling; in that the apparatus is installed on the column; and in that the filling is initially pressed (compressed) by means of the apparatus and the maximum pressure is subsequently applied.

## Revendications

1. Appareil pour comprimer axialement une colonne pour la chromatographie, comprenant un accumulateur de force (11), ladite colonne pouvant être pourvue d'un garnissage et être obturée aux extrémités au moyen d'un premier et d'un deuxième corps de fermeture, caractérisé par un boîtier de forme cylindrique (3) et un couvercle (6) doté d'un perçage traversant, qui referme le boîtier (3) sur un côté, par une broche filetée (7) qui traverse le couvercle (6) et est en liaison active avec le premier corps de fermeture (10) afin de déplacer le premier corps de fermeture dans la colonne et de solliciter en pression le garnissage, par un écrou (8) et par une pièce (14) reliée d'une part avec l'écrou (8) et guidée d'autre part dans une fente (15) de telle façon que l'écrou (8) est agencé sans possibilité de rotation sur la broche filetée (7), dans lequel l'accumulateur de force (11) est agencé entre l'écrou (8) et le couvercle (6) du boîtier (3) et entoure partiellement la broche filetée (7), dans lequel le l'écrou est déplacé contre l'accumulateur de force (11) par rotation de la broche filetée (7), afin de transférer la pression appliquée sur la garniture vers l'accumulateur de force (11), et dans lequel l'accumulateur de force est destiné à maintenir cette pression.

2. Appareil selon la revendication 1, caractérisé en ce que l'accumulateur de force (11) est constitué par des rondelles-ressorts.

3. Appareil selon la revendication 1, caractérisé en ce que la broche filetée (7) est reliée au premier corps de fermeture (10).

4. Appareil selon la revendication 1, caractérisé par un dispositif d'entraînement (16) relié à la broche filetée (7).

5. Appareil selon la revendication 1, caractérisé on ce qu'il est prévu une première unité de filtration (18) agencée dans le premier corps de fermeture (10), et en ce que ladite unité de filtration est un corps fritté.

6. Appareil selon la revendication 5, caractérisé en ce que l'unité de filtration (18) comprend au moins deux organes, réalisés en un matériau choisi parmi le groupe comprenant: verre, céramique, métal ou matière plastique.

7. Appareil selon la revendication 1, caractérisé en ce que la broche filetée (7) est une broche creuse, et en ce qu'il est prévu une conduite d'amenée (17), qui passe à travers la broche creuse et qui débouche dans l'unité de filtration du premier corps de fermeture (10).

8. Appareillage pour la chromatographie, comprenant une colonne (2) et un appareil selon l'une des revendications 2 à 7, caractérisé en ce que la colonne (2) contient un tube (21), un dispositif de maintien (22) avec deux brides (25), appliquées sur les faces frontales du tube, trois barres de traction (26), qui retiennent les brides contre le tube, un deuxième corps de fermeture (24) et une bride de fermeture (23), et est réalisée sous forme d'une unité structurelle, et en ce que l'appareil est monté sur le dispositif de maintien (22), de sorte que la colonne (2) soit refermée d'une part par l'appareil et d'autre part par le deuxième corps de fermeture (24).

9. Appareillage selon la revendication 8, caractérisé en ce que le tube (21) est réalisé en un matériau choisi parmi le groupe comprenant : verre, céramique, métal ou matière plastique.

10. Appareillage selon la revendication 9, caractérisé en ce qu'il est prévu une deuxième unité de filtration (18) agencée dans le deuxième corps de fermeture (10), et en ce que l'unité de filtration est un corps fritté.

11. Appareillage selon la revendication 9, caractérisé en ce que la deuxième unité de filtration (18) comprend au moins deux organes, réalisés en un matériau choisi parmi le groupe comprenant : verre, céramique, métal ou matière plastique.

12. Procédé pour le fonctionnement de l'appareillage selon l'une des revendications 8 à 11, caractérisé cri ce que la colonne est pourvue d'un garnissage, en ce que le dispositif est monté sur la colonne, et en ce que, au moyen de ce dispositif, le garnissage est tout d'abord pressé (comprimé), et ensuite soumis à la pression maximum.
